# EUROPÄISCHE PATENTSCHRIFT

(11) **EP 3 589 500 B1**
(45) Veröffentlichungstag und Bekanntmachung des Hinweises auf die Patenterteilung: **13.01.2021**
(21) Anmeldenummer: 17710258.9
(22) Anmeldetag: 13.03.2017
(51) Int. Cl.: B60C 11/03

(54) **FAHRZEUGLUFTREIFEN**
PNEUMATIC VEHICLE TYRE
PNEUMATIQUE DE VÉHICULE

(30) Priorität: 28.02.2017 DE 102017203225
(43) Veröffentlichungstag der Anmeldung: 08.01.2020
(73) Patentinhaber: Continental Reifen Deutschland GmbH, 30165 Hannover (DE)
(72) Erfinder: DIENSTHUBER, Franz, 60528 Frankfurt (DE); SENG, Matthias, 30453 Hannover (DE)
(74) Vertreter: Finger, Karsten
(86) Internationale Anmeldenummer: PCT/EP2017/055776
(87) Internationale Veröffentlichungsnummer: WO 2018/157952

(56) Entgegenhaltungen:
- EP-A1- 2 230 103
- EP-A1- 2 322 359
- EP-A1- 2 965 925
- EP-A1- 3 075 572
- WO-A1-2013/079343
- WO-A1-2016/156704
- WO-A1-2016/189418
- JP-A- 2001 187 520
- JP-A- 2015 051 753
- JP-A- 2016 000 578
- US-S1- D 464 609

## Beschreibung

Die Erfindung betrifft einen Fahrzeugluftreifen mit einem laufrichtungsgebunden gestalteten Laufstreifen mit über die Laufstreifenbreite V-förmig zueinander verlaufenden Schrägrillen als Hauptrillen, welche in jeder Laufstreifenhälfte in Umfangsrichtung aufeinanderfolgende und bis zum Laufstreifenrand verlaufende langgestreckte Profilklötze begrenzen, wobei die langgestreckten Profilklötze jeweils von zumindest zwei in Draufsicht gerade verlaufenden und in die Schrägrillen einmündenden Nuten durchquert sind, wobei die in der einen Laufstreifenhälfte verlaufenden Nuten zu den in der anderen Laufstreifenhälfte verlaufenden Nuten bezüglich der Reifenumfangsrichtung gegensinnig geneigt sind, wobei die Nuten mit ihren laufstreifenaußenseitigen Enden bei Vorwärtsfahrt zuerst in den Untergrund eintreten, und wobei in jeder Laufstreifenhälfte der Winkel, den die Nuten mit der Umfangsrichtung einschließen, mit zunehmender Entfernung ihrer Position von der Äquatorialebene von Nut zu Nut abnimmt.

Ein derartiger Fahrzeugluftreifen ist beispielsweise aus der WO 2013/079343 A1 bekannt. Der Reifen weist einen Laufstreifen mit über die Laufstreifenbreite V-förmig zueinander verlaufenden Schrägrillen auf, welche langgestreckte Profilklötze begrenzen, die jeweils von zumindest zwei in Draufsicht gerade verlaufenden, in die Schrägrillen einmündenden Nuten durchquert sind. Die Schrägrillen verlaufen gegenüber der Umfangsrichtung bzw. der Äquatorialebene unter einem Winkel von 30° bis 50°. Die laufstreifenaußenseitig verlaufenden Nuten verlaufen zur Umfangsrichtung unter einem Winkel von 3° bis 15°, die am Nächsten zur Äquatorialebene verlaufenden Nuten verlaufen zur Umfangsrichtung unter einem Winkel, welcher um bis zu 5° größer ist als die Winkel der laufstreifenaußenseitig verlaufenden Nuten.

Weitere Fahrzeugluftreifen mit V-förmig zueinander verlaufende Schrägrillen aufweisenden Laufstreifen sind beispielsweise aus der EP 2 965 925 A1, der JP 2016 000 578 A, der WO 2016/189418 A1, der EP 3 075 572 A1, der WO 2016/156704 A1, der JP 2001 187 520 A, der US D 464 609 und der JP 2015 051 753 A bekannt.

Fahrzeugluftreifen mit im Laufstreifen V-förmig zueinander verlaufenden Schrägrillen, welche langgestreckte Profilklötze begrenzen sind in verschiedenen Ausgestaltungen bekannt. Die in solchen Laufstreifen oft im Wesentlichen quer orientierten langgestreckten Profilklötze weisen üblicherweise wenige, die Klotzstruktur unterbrechende Nuten auf. Reifen mit solchen Laufstreifenprofilen besitzen eine gute Eignung als All Season- und Winterreifen, insbesondere, wenn sie zusätzlich vorzugsweise in Laufstreifenquerrichtung orientierte schmale Einschnitte aufweisen. Laufstreifen mit im Wesentlichen quer orientierten langgestreckten Profilklötzen zeigen oft einen ungleichmäßigen Abrieb, welcher sich nachteilig auf das Abrollgeräusch des Reifens auswirkt. Die langgestreckten Profilklötze verursachen ferner relativ lange Wasserverdrängungswege, da auf nasser Fahrbahn Wasser im Wesentlichen nur über die Schrägrillen abgeleitet wird. Dadurch wird die Kontaktfläche der Profilklötze auf nasser Fahrbahn schon bei niedrigen Geschwindigkeiten reduziert, sodass die Gefahr von Aquaplaning erhöht ist.

Der Erfindung liegt daher die Aufgabe zugrunde, bei einem als All-Season-Reifen geeigneten Reifen der eingangs genannten Art den Laufstreifen derart zu gestalten, dass ein gutes Wasserdrainagevermögen und ein gleichmäßiger Abrieb erzielt werden, wobei die durch die langgestreckten Profilklötze bedingten vorteilhaften Fahreigenschaften auf winterlichen und auf trockenen Fahrbahnen erhalten bleiben sollen.

Die gestellte Aufgabe wird erfindungsgemäß dadurch gelöst,
dass die Nutmittellinien von am Nächsten zur Äquatorialebene verlaufenden Nuten mit Tangenten, welche an die Rillenmittellinien der Schrägrillen angelegt sind und durch Schnittpunkte zwischen den Nutmittellinien und den Rillenmittellinien verlaufen, Winkel einschließen, welche von 90° um bis zu 20° abweichen und
dass die Nutmittellinien von am weitesten laufstreifenaußenseitig verlaufenden Nuten mit Tangenten, welche an die Rillenmittellinien der Schrägrillen angelegt sind und durch Schnittpunkte zwischen den Nutmittellinien und den Rillenmittellinien verlaufen, Winkel einschließen, welche von 90° um 15° bis 30° abweichen,
wobei die Nuten in radialer Richtung eine Tiefe von 40% bis 60% der jeweils vorgesehenen Profiltiefe und an der Laufstreifenperipherie eine Breite von 2,4 mm bis 3,0 mm aufweisen und
wobei die Nuten jeweils mit einem von der Mitte ihres Nutgrundes ausgehenden in radialer Richtung verlaufenden Einschnitt mit einer konstanten Breite von 0,2 mm bis 0,7 mm versehen sind, welcher in Draufsicht entlang der Nutmittellinie verläuft und in die Schrägrillen einmündet.

Die gemäß der Erfindung in den langgestreckten Profilklötzen des Laufstreifens ausgebildeten Nuten ermöglichen eine gute Entwässerung der langgestreckten Profilklötze, da die Nuten die Wasserverdrängungswege vorteilhaft verkürzen. Näher zur Äquatorialebene positionierte Nuten sind dabei zur Umfangsrichtung stärker geneigt und bilden daher relativ kurze Verbindungswege zwischen den Schrägrillen, wodurch im kritischen zentralen Bereich des Laufstreifens Wasser besonders schnell in die als Hauptentwässerungsrillen dienenden Schrägrillen abgeleitet wird. Von der Äquatorialebene weiter entfernt befindliche Nuten sind gegenüber der Umfangsrichtung etwas weniger stark geneigt. An diesen Nuten kann das durch die schrägen Hauptentwässerungsrillen zu den Laufstreifenaußenseiten strömende Wasser im Wesentlichen verwirbelungsfrei vorbeiströmen, sodass der Laufstreifen effektiver entwässert wird. Beim Fahren auf schneebedeckter Fahrbahn kann sich in den zwischen den Schrägrillen ausgebildeten Nuten besonders gut Schnee ansammeln, wodurch eine gute Schnee/Schnee-Reibung erzielt wird und derart die Schneegriffeigenschaften verbessert werden. Zusätzlich weist der Laufstreifen infolge der nach wie vor vorhandenen langgestreckten Profilklötze eine für die Fahreigenschaften auf trockener Fahrbahn günstige Steifigkeitsverteilung auf, sodass der Laufstreifen sehr gleichmäßig abreibt. Ein erfindungsgemäßer Reifen ist daher insbesondere auch als Ganzjahresreifen geeignet.

Die aus Anspruch 1 resultierende Neigung der am weitesten laufstreifenaußenseitig verlaufenden Nuten ist insbesondere deshalb von Vorteil, weil das durch die angrenzenden Schrägrillen zur Laufstreifenaußenseite fließendes Wasser nahezu verwirbelungsfrei an den Nuten vorbeiströmen kann, was die Wasserableitung im Laufstreifens zusätzlich verbessert. Durch die Einschnitte wird die Quersteifigkeit der langgestreckten Profiklötze geringfügig reduziert, was sich vorteilhaft auf den Fahrkomfort auswirkt. Bedingt durch Abstützungseffekte weisen die langgestreckten Profiklötze nach wie vor eine gute Stabilität bei Kurvenfahrt auf.

Bei einer bevorzugten Ausführungsvariante der Erfindung verlaufen die die langgestreckten Profilklötze durchquerenden Nuten innerhalb eines zentralen Umfangsabschnittes des Laufstreifens, welcher in axialer Richtung eine Breite von 50% bis 75% der Bodenaufstandsflächenbreite aufweist. Diese Maßnahme ist im Hinblick auf die oben beschriebenen Effekte von Vorteil. Die Nuten sorgen daher für eine besonders gute Wasserableitung aus dem diesbezüglich kritischen zentralen Laufstreifenbereich.

Bei weiteren bevorzugten Ausführungsvarianten sind in den langgestreckten Profilklötzen jeweils zwei bis vier in Draufsicht gerade verlaufende und in die Schrägrillen einmündende Nuten vorgesehen. Die Anzahl der Nuten wird dabei insbesondere auf die Länge der langgestreckten Profilklötze abgestimmt, sodass längere Profilklötze mit mehr Nuten versehen sind als kürzere Profilklötze.

Für das Wasserdrainagevermögen ist es ferner von Vorteil, wenn die Winkel, welche die Nutmittellinien von am Nächsten zur Äquatorialebene verlaufenden Nuten mit den Tangenten einschließen, von 90° um höchstens 15°, vorzugsweise um bis zu 12°, abweichen. Solche Nuten bilden besonders kurze Verbindungswege zwischen den als Hauptentwässerungsrillen dienenden Schrägrillen.

Besonders vorteilhaft ist es, wenn die Winkel, welche die Nutmittellinien von am weitesten laufstreifenaußenseitig verlaufenden Nuten mit den Tangenten einschließen, von 90° um 20° bis 25° abweichen.

Bei einer bevorzugten Ausführungsvariante gliedern die Nuten die langgestreckten Profilklötze in schulterseitige Klotzsegmente und mittlere Klotzsegmente, wobei die mittleren Klotzsegmente entlang ihrer Klotzmittellinien übereinstimmende Erstreckungslängen aufweisen. Gemäß einer alternativen bevorzugten Ausführungsvariante gliedern die Nuten die langgestreckten Profilklötze in schulterseitige Klotzsegmente und mittlere Klotzsegmente, wobei die mittleren Klotzsegmente entlang ihrer Klotzmittellinien unterschiedliche Erstreckungslängen aufweisen, wobei vorzugsweise die Erstreckungslänge der mittleren Klotzsegmente mit zunehmender Entfernung ihrer Position von der Äquatorialebene grösser wird und wobei insbesondere die Erstreckungslänge des längsten mittleren Klotzsegmentes um höchstens 20% größer ist als die Erstreckungslänge des kürzesten mittleren Klotzsegmentes.

Ein vorteilhafter Kompromiss zwischen dem Wasserdrainagevermögen und der Steifigkeit der langgestreckten Profilklötze wird erreicht, wenn die Tiefe der Nuten 45% bis 55%, insbesondere 50%, der jeweils vorgesehenen Profiltiefe beträgt. Bei dieser bevorzugten Variante sind die durch langgestreckte Profilklötze bedingten vorteilhaften Fahreigenschaften auf winterlichen und auf trockenen Fahrbahnen besonders ausgeprägt.

Ferner ist es bevorzugt, wenn die Einschnitte in den Nuten in radialer Richtung in einem Abstand von bis zu 2,0 mm über dem Niveau der Profiltiefe enden.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine schematische Draufsicht auf eine Teilabwicklung eines Laufstreifens eines Fahrzeugluftreifens mit einer Ausführungsvariante der Erfindung und
Fig. 2 eine vergrößerte Ansicht des Details D1 der Fig. 1,
Fig. 3 eine vergrößerte Ansicht des Details D2 der Fig. 1 und
Fig. 4 einen Schnitt entlang der Linie IV-IV der Fig. 1.

Erfindungsgemäß ausgeführte Fahrzeugluftreifen sind insbesondere Reifen in Radialbauart für PKWs, Vans oder Light-Trucks, welche für den ganzjährigen Einsatz geeignet sind.

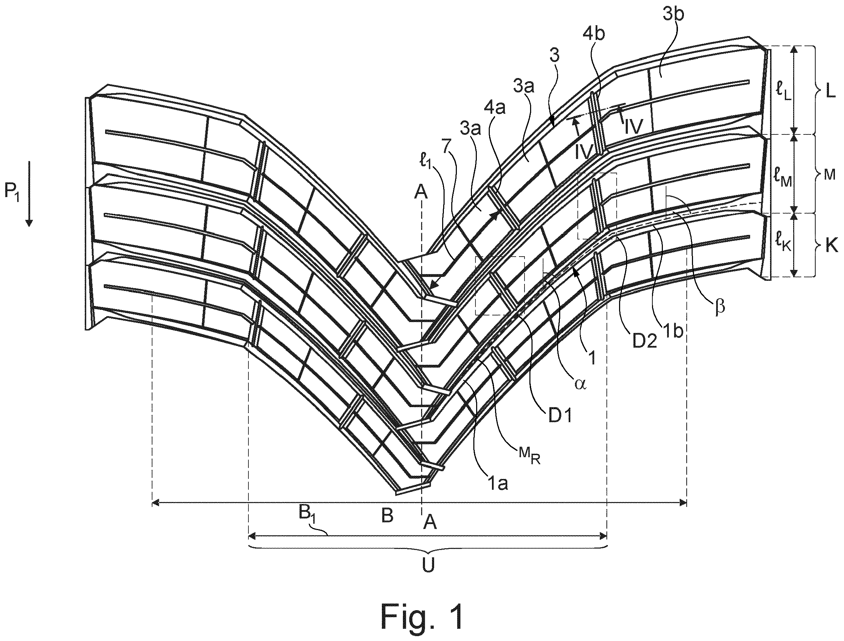

Der in Fig. 1 gezeigte Laufstreifen weist in jeder Laufstreifenhälfte parallel zueinander verlaufende Schrägrillen 1 auf, welche sich von der Laufstreifenmitte bis zu den Laufstreifenrändern erstrecken und dem Laufstreifen in Draufsicht ein gepfeiltes Profil verleihen, sodass die Schrägrillen 1 die Hauptrillen des Laufstreifens sind. Die Abrollrichtung des Reifens bei Vorwärtsfahrt ist durch den Pfeil Pi angedeutet und ist derart, dass die Schrägrillen 1 bei Vorwärtsfahrt zuerst mit ihren laufstreifeninnenseitigen Enden in die Bodenaufstandsfläche eintreten. Die Bodenaufstandsfläche des Laufstreifens entspricht dem statisch ermittelten Footprint (Last bei 70 % der maximalen Tragfähigkeit bei einem Innendruck von 85 % nach E.T.R.T.O-Norm) und weist eine größte Bodenaufstandsflächenbreite B auf. Die Äquatorialebene des Reifens ist durch die Linie A-A angedeutet.

Der Laufstreifen ist gemäß einem Verfahren der Pitchlängenvariation geräuschoptimiert und setzt sich aus in Umfangsrichtung aufeinanderfolgenden Pitches (Profilabschnitten) zusammen, wobei beim gezeigten Ausführungsbeispiel Pitches L, M, K mit drei unterschiedlichen Umfangslängen l_{L}, l_{M}, l_{K} vorgesehen sind. In Fig. 1 ist beispielhaft eine Aufeinanderfolge eines Pitches L mit der größten Umfangslänge l_{L}, eines Pitches M mit der Umfangslänge l_{M} und eines Pitches K mit der kleinsten Umfangslänge l_{K} vorgesehen. Die Pitches L, M, K werden über den Laufstreifenumfang innerhalb einer sogenannten Pitchfolge, die üblicherweise rechnerisch ermittelt wird, angeordnet.

Die in unterschiedlichen Laufstreifenhälften verlaufenden Schrägrillen 1 sind in Umfangsrichtung um die Hälfte einer mittleren Umfanglänge, welche als Mittelwert aus den Umfangslängen l_{L}, l_{M}, l_{K} der Pitches L, M, K errechnet ist, versetzt, laufen laufstreifeninnenseitig nahe der Äquatorialebene des Reifens aus und enden dort in einem Abstand vor der jeweils in der andern Laufstreifenhälfte verlaufenden Schrägrille 1. Jede Schrägrille 1 weist eine in Rillenlaufrichtung ausgerichtete Rillenmittellinie M_{R} auf, welche in Fig. 1 für eine Schrägrille 1 strichliert eingezeichnet ist.

Beim gezeigten Ausführungsbeispiel verlaufen die Schrägrillen 1 in Draufsicht leicht gebogen und weisen einen inneren Rillenabschnitt 1a und einen zum Laufstreifenrand verlaufenden zur Umfangsrichtung stärker geneigten schulterseitigen Rillenabschnitt 1b auf. Die inneren Rillenschnitte 1a nehmen zumindest 55%, insbesondere mindestens 60%, der entlang der Rillenmittellinien M_{R} ermittelten Erstreckungslängen der Schrägrillen 1 ein und erstrecken sich bezogen auf die Rillenmittellinien M_{R} zur Umfangsrichtung vorzugsweise unter einem Winkel α von 25° bis 45°. Die schulterseitigen Rillenabschnitte 1b erstrecken sich bezogen auf die Rillenmittellinie M_{R} zur Umfangsrichtung vorzugsweise unter einem Winkel β von 75° bis 90°. Bei einer alternativen Ausführung verlaufen die Schrägrillen von der Laufstreifenmitte bis zum Laufstreifenrand kontinuierlich leicht gebogen.

In jeder Laufstreifenhälfte begrenzen die in Umfangsrichtung benachbarten Schrägrillen 1 jeweils einen in Laufstreifenquerrichtung langgestreckten Profilklotz 3. Jeder Profilklotz 3 ist von einer näher zur Äquatorialebene befindlichen inneren Nut 4a und einer äußeren Nut 4b durchquert, die Nuten 4a, 4b münden daher jeweils in die den betreffenden langgestreckten Profilklotz 3 in Umfangsrichtung begrenzenden Schrägrillen 1. Die Nuten 4a, 4b verlaufen innerhalb eines zentralen Umfangsabschnittes U des Laufstreifens, welcher eine axiale Breite B₁ von 50% bis 75% der Bodenaufstandsflächenbreite B aufweist. In unterschiedlichen Laufstreifenhälften verlaufende Nuten 4a, 4b sind gegensinnig zu einander geneigt und ferner jeweils derart zur Umfangsrichtung orientiert, dass ihre weiter laufstreifenaußenseitig liegenden Enden bei Vorwärtsfahrt zuerst in den Untergrund eintreten. Die inneren Nuten 4a sind zur Umfangsrichtung unter einem größeren Winkel geneigt als die äußeren Nuten 4b.

Die Nuten 4a, 4b gliedern die langgestreckten Profilklötze 3 jeweils in zwei mittlere Klotzsegmente 3a und ein schulterseitiges Klotzsegment 3b. Die mittleren Klotzsegmente 3a weisen beim gezeigten Ausführungsbeispiel übereinstimmende Erstreckungslängen l₁ auf, welche jeweils entlang der Klotzmittellinien ermittelt werden, die im Wesentlichen parallel zu den Rillenmittellinien M_{R} der Schrägrillen 1 verlaufen. Die Erstreckungslängen l₁ der in jeder Laufstreifenhälfte befindlichen und zum selben Profilklotz 3 gehörenden mittleren Klotzsegmente 3a können auch voneinander abweichen, wobei die Erstreckungslänge des längeren mittleren Klotzsegmentes 3a um höchstens 20% größer ist als Erstreckungslänge des kürzeren mittleren Klotzsegmentes 3a. Vorzugsweise wird die Erstreckungslänge der mittleren Klotzsegmente 3a mit zunehmender Entfernung ihrer Position von der Äquatorialebene grösser.

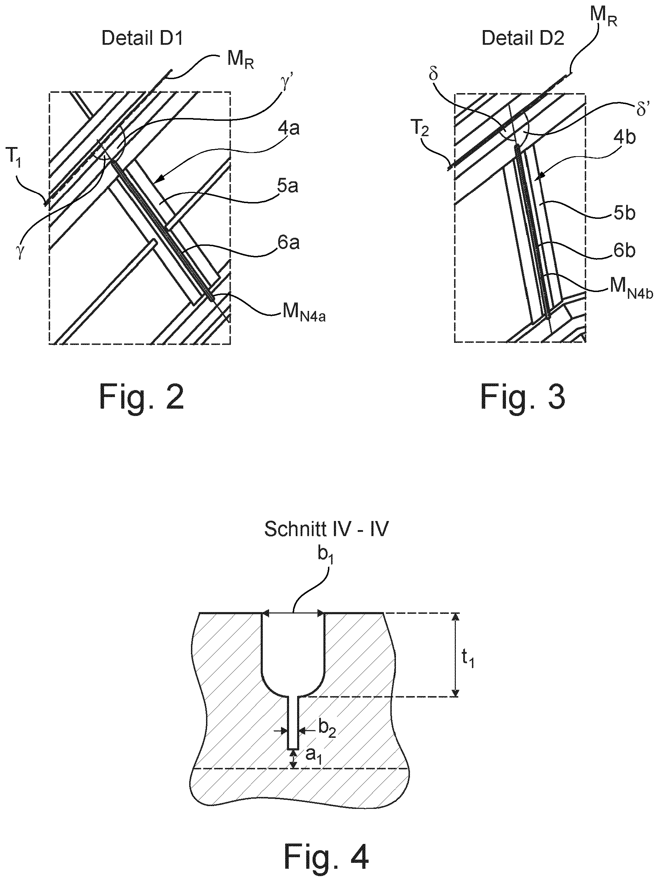

In Fig. 2 ist eine in Nutlaufrichtung der Nut 4a ausgerichtete Nutmittlinie M_{N4a} sowie eine durch den Schnittpunkt der Rillenmittellinie M_{R} und der Verlängerung der Nutmittlinie M_{N4a} verlaufende und an die Rillenmittellinie M_{R} angelegte Tangente T₁ eingezeichnet. Aufgrund der starken Vergrößerung liegen die Tangente T₁ und die Rillenmittellinie M_{R} in Fig. 2 sehr nahe beieinander. Gemäß Fig. 2 verläuft die Nutmittlinie M_{N4a} jeder inneren Nut 4a in Draufsicht jeweils gerade sowie senkrecht oder im Wesentlichen senkrecht zu den Rillenmittellinien M_{R} der Schrägrillen 1. Die Nutmittlinie M_{N4a} der inneren Nut 4a schließt mit der Tangente T₁ zur Laufstreifeninnenseite einen Innenwinkel γ und zur Laufstreifenaußenseite einen Außenwinkel γ' ein. Der Innenwinkel γ und der Außenwinkel γ' weichen von 90° um bis zu 20°, insbesondere um höchstens 15°, und besonders bevorzugter Weise um höchstens 12° ab. In Fig. 3 ist eine in Nutlaufrichtung der Nut 4b ausgerichtete Nutmittlinie M_{N4b} sowie eine durch den Schnittpunkt der Rillenmittellinien M_{R} und der Verlängerung der Nutmittlinie M_{N4b} verlaufende und an die Rillenmittellinie M_{R} angelegte Tangente T₂ eingezeichnet. Aufgrund der starken Vergrößerung liegen auch in Fig. 3 die Tangente T₂ und die Rillenmittellinie M_{R} in Fig. 3 sehr nahe beieinander. Wie Fig. 3 zeigt, verläuft die Nutmittlinie M_{N4b} der äußeren Nut 4b in Draufsicht ebenfalls jeweils gerade und schließt mit der Tangente T₂ zur Laufstreifeninnenseite einen Innenwinkel δ und zur Laufstreifenaußenseite einen Außenwinkel δ' ein. Der Innenwinkel δ und der Außenwinkel δ' weichen von 90° jeweils um 15° bis 30°, insbesondere um 20° bis 25°, ab.

Beim gezeigten Ausführungsbeispiel weisen die Nuten 4a, 4b übereinstimmende Querschnitte auf, sind, wie Fig. 4 zeigt, im Querschnitt betrachtet, im Wesentlichen U-förmig ausgeführt und weisen in radialer Richtung eine Tiefe ti von 40% bis 60%, insbesondere von 45% bis 55%, und besonders bevorzugter Weise 50%, der jeweils vorgesehenen Profiltiefe auf, welche üblicherweise 6,5 mm bis 9,0 mm beträgt. An der Laufstreifenperipherie weisen die Nuten 4a, 4b jeweils eine Breite b₁ von 2,4 mm bis 3,0 mm auf. Bevorzugter Weise werden die Nuten 4a, 4b zu ihrem jeweils weiter laufstreifenaußenseitig befindlichen Enden geringfügig breiter, insbesondere ist die Breite der Nuten 4a, 4b am weiter laufstreifenaußenseitig befindlichen Ende um 5% größer als am anderen Ende.

Von der Mitte des Nutgrundes 5a, 5b der Nuten 4a, 4b erstreckt sich jeweils ein Einschnitt 6a, 6b in radialer Richtung, welcher in Draufsicht entlang der Nutmittellinie M_{N4a}, M_{N4b} verläuft und ebenfalls in die jeweiligen Schrägrillen 1 einmündet. Jeder Einschnitt 6a, 6b weist eine kontante Breite b₂ von 0,2 mm bis 0,7 mm auf und endet in einem in radialer Richtung ermittelten Abstand a₁ von bis zu 2,0 mm über dem Niveau der Profiltiefe, welche in Fig. 4 strichliert eingezeichnet ist.

Bei der in Fig. 1 gezeigten Ausführungsvariante weist jedes mittlere Klotzsegment 3a und jedes schulterseitige Klotzsegment 3b ferner eine zusätzliche in die Schrägrillen 1 einmündende nur oberflächlich ausgebildete und sehr schmale Nut 7 auf.

Die Erfindung ist nicht auf das beschriebene Ausführungsbeispiel beschränkt. Insbesondere können die langgestreckten Profilklötze 3 auch mit drei oder vier Nuten versehen sein, welche in die Schrägrillen 1 einmünden. Näher zur Äquatorialebene befindliche Nuten sind gegenüber den von der Äquatorialebene weiter entfernt befindlichen Nuten unter einem größeren Winkel zur Umfangsrichtung geneigt. Beispielsweise nimmt bei drei Nuten daher der Winkel, den sie mit der Umfangsrichtung einschließen, mit zunehmender Entfernung ihrer Position von der Äquatorialebene von Nut zu Nut ab. Die Klotzsegmente können in an sich bekannter Weise mit Einschnitten versehen sein, welche sich vorzugsweise im Wesentlichen parallel zu den Schrägrillen 1 erstrecken. Insbesondere ist jedes Klotzsegment mit einem einzigen Einschnitt versehen.

### Bezugsziffernliste

- 1: Schrägrille
- 1a: innerer Rillenabschnitt
- 1b: schulterseitiger Rillenabschnitt
- 3: Profilklotz
- 3a: mittleres Klotzsegment
- 3b: schulterseitiges Klotzsegment
- 4a: innere Nut
- 4b: äußere Nut
- 5a, 5b: Nutgrund
- 6a, 6b: Einschnitt
- 7: Nut
- A-A: Äquatorialebene
- a₁: Abstand
- B: Bodenaufstandsflächenreite
- b₁, b₂ , B₁, B₂: Breite
- L, M, K: Pitch
- l_{L}, l_{M}, l_{K}: Umfangslänge
- l₁: Erstreckungslänge
- M_{R}: Rillenmittellinie
- M_{N4a}, M_{N4b}: Nutmittellinie
- P₁: Abrollrichtung, Pfeil
- t₁: Tiefe
- T₁, T₂: Tangente
- U: Umfangsabschnitt
- α, β, γ: Winkel
- δ: Innenwinkel
- δ': Außenwinkel

## Patentansprüche

1. Fahrzeugluftreifen mit einem laufrichtungsgebunden gestalteten Laufstreifen mit über die Laufstreifenbreite V-förmig zueinander verlaufenden Schrägrillen (1) als Hauptrillen, welche in jeder Laufstreifenhälfte in Umfangsrichtung aufeinanderfolgende und bis zum Laufstreifenrand verlaufende langgestreckte Profilklötze (3) begrenzen,
wobei die langgestreckten Profilklötze (3) jeweils von zumindest zwei in Draufsicht gerade verlaufenden und in die Schrägrillen (1) einmündenden Nuten (4a, 4b) durchquert sind, wobei die in der einen Laufstreifenhälfte verlaufenden Nuten (4a, 4b) zu den in der anderen Laufstreifenhälfte verlaufenden Nuten (4a, 4b) bezüglich der Reifenumfangsrichtung gegensinnig geneigt sind, wobei die Nuten (4a, 4b) mit ihren laufstreifenaußenseitigen Enden bei Vorwärtsfahrt zuerst in den Untergrund eintreten, und wobei in jeder Laufstreifenhälfte der Winkel, den die Nuten (4a, 4b) mit der Umfangsrichtung einschließen, mit zunehmender Entfernung ihrer Position von der Äquatorialebene von Nut (4a) zu Nut (4b) abnimmt,
**dadurch gekennzeichnet,**
**dass** die Nutmittellinien (M_{N4a}) von am Nächsten zur Äquatorialebene verlaufenden Nuten (4a) mit Tangenten (T₁), welche an die Rillenmittellinien (M_{R}) der Schrägrillen (1) angelegt sind und durch Schnittpunkte zwischen den Nutmittellinien (M_{N4a}) und den Rillenmittellinien (M_{R}) verlaufen Winkel (γ, γ') einschließen, welche von 90° um bis zu 20° abweichen und
**dass** die Nutmittellinien (M_{N4b}) von am weitesten laufstreifenaußenseitig verlaufenden Nuten (4b) mit Tangenten (T₂), welche an die Rillenmittellinien (M_{R}) der Schrägrillen (1) angelegt sind und durch Schnittpunkte zwischen den Nutmittellinien (M_{N4b}) und den Rillenmittellinien (M_{R}) verlaufen, Winkel (δ, δ') einschließen, welche von 90° um 15° bis 30° abweichen,
wobei die Nuten (4a, 4b) in radialer Richtung eine Tiefe (t₁) von 40% bis 60% der jeweils vorgesehenen Profiltiefe und an der Laufstreifenperipherie eine Breite (b₁) von 2,4 mm bis 3,0 mm aufweisen und
wobei die Nuten (4a, 4b) jeweils mit einem von der Mitte ihres Nutgrundes (5a, 5b) ausgehenden in radialer Richtung verlaufenden Einschnitt (6a, 6b) mit einer konstanten Breite (B₂) von 0,2 mm bis 0,7 mm versehen sind, welcher in Draufsicht entlang der Nutmittellinie (M_{N4a}, M_{N4b}) verläuft und in die Schrägrillen (1) einmündet.

2. Fahrzeugluftreifen nach Anspruch 1, **dadurch gekennzeichnet, dass** die Nuten (4a, 4b) innerhalb eines zentralen Umfangsabschnittes (U) des Laufstreifens verlaufen, welcher in axialer Richtung eine Breite (B₁) von 50% bis 75% der Bodenaufstandsflächenbreite (B) aufweist.

3. Fahrzeugluftreifen nach Anspruch 1 oder 2, **dadurch gekennzeichnet, dass** die langgestreckten Profilklötze (3) jeweils mit zwei in Draufsicht gerade verlaufenden und in die Schrägrillen (1) einmündenden Nuten (4a, 4b) versehen sind.

4. Fahrzeugluftreifen nach Anspruch 1 oder 2, **dadurch gekennzeichnet, dass** die langgestreckten Profilklötze (3) jeweils mit drei in Draufsicht gerade verlaufenden und in die Schrägrillen (1) einmündenden Nuten versehen sind.

5. Fahrzeugluftreifen nach Anspruch 1 oder 2, **dadurch gekennzeichnet, dass** die langgestreckten Profilklötze (3) jeweils mit vier in Draufsicht gerade verlaufenden und in die Schrägrillen (1) einmündenden Nuten versehen sind.

6. Fahrzeugluftreifen nach einem der Ansprüche 1 bis 5, **dadurch gekennzeichnet, dass** die Winkel (γ, γ'), welche die Nutmittellinien (M_{N4a}) von am Nächsten zur Äquatorialebene verlaufenden Nuten (4a) mit den Tangenten (T₁) einschließen, von 90° um höchstens 15°, vorzugsweise um bis zu 12°, abweichen.

7. Fahrzeugluftreifen nach Anspruch 1, **dadurch gekennzeichnet, dass** die Winkel (δ, δ'), welche die Nutmittellinien (M_{N4a}) von am weitesten laufstreifenaußenseitig verlaufenden Nuten (4b) mit den Tangenten (T₂) einschließen, von 90° um 20° bis 25° abweichen.

8. Fahrzeugluftreifen nach einem der Ansprüche 1 bis 7, **dadurch gekennzeichnet, dass** die Nuten (4a, 4b) die langgestreckten Profilklötze (3) in schulterseitige Klotzsegmente (3b) und mittlere Klotzsegmente (3a) gliedern, wobei die mittleren Klotzsegmente (3a) entlang ihrer Klotzmittellinien übereinstimmende Erstreckungslängen (l₁) aufweisen.

9. Fahrzeugluftreifen nach einem der Ansprüche 1 bis 8, **dadurch gekennzeichnet, dass** die Nuten (4a, 4b) die langgestreckten Profilklötze (3) in schulterseitige Klotzsegmente (3b) und mittlere Klotzsegmente (3a) gliedern, wobei die mittleren Klotzsegmente (3a) entlang ihrer Klotzmittellinien unterschiedliche Erstreckungslängen (l₁) aufweisen, wobei vorzugsweise die Erstreckungslänge der mittleren Klotzsegmente (3a) mit zunehmender Entfernung ihrer Position von der Äquatorialebene grösser wird und wobei insbesondere die Erstreckungslänge des längsten mittleren Klotzsegmentes (3a) um höchstens 20% größer ist als die Erstreckungslänge des kürzesten mittleren Klotzsegmentes (3a).

10. Fahrzeugluftreifen nach einem der Ansprüche 1 bis 9, **dadurch gekennzeichnet, dass** die Tiefe (t₁) der Nuten (4a, 4b) 45% bis 55%, insbesondere 50%, der jeweils vorgesehenen Profiltiefe beträgt.

11. Fahrzeugluftreifen nach Anspruch 1, **dadurch gekennzeichnet, dass** die Einschnitte (6a, 6b) in den Nuten (4a, 4b) in radialer Richtung in einem Abstand (a₁) von bis zu 2,0 mm über dem Niveau der Profiltiefe enden.

## Claims

1. Pneumatic vehicle tyre having a tread which is of directional design and which has oblique channels (1), which run over the tread width in a V-shaped manner in relation to one another, as main channels, which in each tread half delimit elongated profile blocks (3) which are arranged in succession in the circumferential direction and extend up to the edge of the tread,
wherein the elongated profile blocks (3) are each crossed by at least two grooves (4a, 4b), which run in a straight manner in plan view and which open into the oblique channels (1), wherein the grooves (4a, 4b) running in one tread half are inclined in relation to the grooves (4a, 4b) running in the other tread half in the opposite direction with respect to the circumferential direction of the tyre, wherein those ends of the grooves (4a, 4b) that are situated at the outer side of the tread come into contact with the ground first during forward travel, and wherein, in each tread half, the angle that the grooves (4a, 4b) form with the circumferential direction decreases from groove (4a) to groove (4b) with increasing distance of the position thereof from the equatorial plane,
**characterized**
**in that** the groove centre lines (M_{N4a}) of grooves (4a) running closest to the equatorial plane form with tangents (T₁), which are created on the channel centre lines (M_{R}) of the oblique channels (1) and run through points of intersection between the groove centre lines (M_{N4a}) and the channel centre lines (M_{R}), angles (γ, γ') that deviate from 90° by up to 20° and
**in that** the groove centre lines (M_{N4b}) of grooves (4b) running furthest towards the outer side of the tread form with tangents (T₂), which are created on the channel centre lines (M_{R}) of the oblique channels (1) and run through points of intersection between the groove centre lines (M_{N4b}) and the channel centre lines (M_{R}), angles (δ, δ') that deviate from 90° by 15° to 30°,
wherein the grooves (4a, 4b) have in the radial direction a depth (t₁) of 40% to 60% of the respectively provided profile depth and have at the periphery of the tread a width (b₁) of 2.4 mm to 3.0 mm and
wherein the grooves (4a, 4b) are each provided with a sipe (6a, 6b) of a constant width (B₂) of 0.2 mm to 0.7 mm which, starting from the middle of the groove base (5a, 5b) thereof, extends in the radial direction and in plan view runs along the groove centre line (M_{N4a}, M_{N4b}) and opens into the oblique channels (1).

2. Pneumatic vehicle tyre according to Claim 1, **characterized in that** the grooves (4a, 4b) run within a central circumferential portion (U) of the tread that has in the axial direction a width (B₁) of 50% to 75% of the width (B) of the ground contact area.

3. Pneumatic vehicle tyre according to Claim 1 or 2, **characterized in that** the elongated profile blocks (3) are each provided with two grooves (4a, 4b) which in plan view run in a straight manner and open into the oblique channels (1).

4. Pneumatic vehicle tyre according to Claim 1 or 2, **characterized in that** the elongated profile blocks (3) are each provided with three grooves which in plan view run in a straight manner and open into the oblique channels (1).

5. Pneumatic vehicle tyre according to Claim 1 or 2, **characterized in that** the elongated profile blocks (3) are each provided with four grooves which in plan view run in a straight manner and open into the oblique channels (1).

6. Pneumatic vehicle tyre according to one of Claims 1 to 5, **characterized in that** the angles (γ, γ') which the groove centre lines (M_{N4a}) of grooves (4a) running closest to the equatorial plane form with the tangents (T₁) deviate from 90° by at most 15°, preferably by up to 12°.

7. Pneumatic vehicle tyre according to Claim 1, **characterized in that** the angles (δ, δ') which the groove centre lines (M_{N4b}) of grooves (4b) running furthest towards the outer side of the tread form with the tangents (T₂) deviate from 90° by 20° to 25°.

8. Pneumatic vehicle tyre according to one of Claims 1 to 7, **characterized in that** the grooves (4a, 4b) divide the elongated profile blocks (3) into shoulder block segments (3b) and central block segments (3a), wherein the central block segments (3a) have matching lengths of extent (l₁) along their block centre lines.

9. Pneumatic vehicle tyre according to one of Claims 1 to 8, **characterized in that** the grooves (4a, 4b) divide the elongated profile blocks (3) into shoulder block segments (3b) and central block segments (3a), wherein the central block segments (3a) have different lengths of extent (l₁) along their block centre lines, wherein preferably the length of extent of the central block segments (3a) becomes greater with increasing distance of their position from the equatorial plane and wherein in particular the length of extent of the longest central block segment (3a) is greater by at least 20% than the length of extent of the shortest central block segment (3a).

10. Pneumatic vehicle tyre according to one of Claims 1 to 9, **characterized in that** the depth (t₁) of the grooves (4a, 4b) is 45% to 55%, in particular 50%, of the profile depth provided in each case.

11. Pneumatic vehicle tyre according to Claim 1, **characterized in that** the sipes (6a, 6b) in the grooves (4a, 4b) end at a distance (a₁) of up to 2.0 mm above the level of the profile depth in the radial direction.

## Revendications

1. Pneumatique de véhicule, comprenant une bande de roulement configurée en fonction de la direction de roulement, dotée de rayures obliques (1) s'étendant en forme de V les unes par rapport aux autres sur la largeur de bande de roulement en tant que rayures principales qui délimitent des blocs de sculpture (3) allongés, se succédant dans chaque moitié de bande de roulement dans la direction circonférentielle, et s'étendant jusqu'au bord de bande de roulement,
les blocs de sculpture allongés (3) étant traversés respectivement par au moins deux rainures (4a, 4b) rectilignes en vue de dessus et débouchant sur les rayures obliques (1), dans lequel les rainures (4a, 4b) s'étendant dans ladite une moitié de bande de roulement sont inclinées par rapport aux rainures (4a, 4b) s'étendant dans l'autre moitié de bande de roulement en sens inverse à la direction circonférentielle de pneu, dans lequel, en marche avant, les rainures (4a, 4b) pénètrent dans le sol d'abord par leurs extrémités côté extérieur de la bande de roulement, et dans lequel, dans chaque moitié de bande de roulement, l'angle formé par les rainures (4a, 4b) avec la direction circonférentielle diminue à mesure que la distance de leur position par rapport au plan équatorial augmente de la rainure (4a) à la rainure (4b),
**caractérisé**
**en ce que** les lignes médianes de rainure (M_{N4a}) des rainures (4a) s'étendant au plus près du plan équatorial forment avec des tangentes (T₁), qui sont construites aux lignes médianes de rayure (M_{R}) des rayures obliques (1) et passent par des points d'intersection entre les lignes médianes de rainure (M_{N4a}) et les lignes médianes de rayure (M_{R}), des angles (γ, γ') qui varient de jusqu'à 20° par rapport à 90°, et
**en ce que** les lignes médianes de rainure (M_{N4b}) des rainures (4b) s'étendant le plus loin côté extérieur de la bande de roulement forment avec des tangentes (T₂), qui sont construites aux lignes médianes de rayure (M_{R}) des rayures obliques (1) et passent par des points d'intersection entre les lignes médianes de rainure (M_{N4b}) et les lignes médianes de rayure (M_{R}), des angles (δ, δ') qui varient de 15° à 30° par rapport à 90°,
les rainures (4a, 4b) présentant dans la direction radiale une profondeur (t₁) de 40 % à 60 % de la profondeur de sculpture prévue respectivement et une largeur (b₁) de 2,4 mm à 3,0 mm à la périphérie de la bande de roulement, et
les rainures (4a, 4b) étant pourvues respectivement d'une entaille (6a, 6b) partant du centre de leur fond de rainure (5a, 5b) et s'étendant dans la direction radiale, d'une largeur constante (B₂) de 0,2 mm à 0,7 mm, qui s'étend le long de la ligne médiane de rainure (M_{N4a}, M_{N4b}) en vue de dessus et débouche sur les rayures obliques (1).

2. Pneumatique de véhicule selon la revendication 1, **caractérisé en ce que** les rainures (4a, 4b) s'étendent à l'intérieur d'une partie circonférentielle centrale (U) de la bande de roulement qui présente dans la direction axiale une largeur (B₁) de 50 % à 75 % de la largeur de surface de contact avec le sol (B).

3. Pneumatique de véhicule selon la revendication 1 ou 2, **caractérisé en ce que** les blocs de sculpture allongés (3) sont pourvus respectivement de deux rainures (4a, 4b) rectilignes en vue de dessus et débouchant sur les rayures obliques (1).

4. Pneumatique de véhicule selon la revendication 1 ou 2, **caractérisé en ce que** les blocs de sculpture allongés (3) sont respectivement pourvus de trois rainures rectilignes en vue de dessus et débouchant sur les rayures obliques (1).

5. Pneumatique de véhicule selon la revendication 1 ou 2, **caractérisé en ce que** les blocs de sculpture allongés (3) sont respectivement pourvus de quatre rainures rectilignes en vue de dessus et débouchant sur les rayures obliques (1).

6. Pneumatique de véhicule selon l'une quelconque des revendications 1 à 5, **caractérisé en ce que** les angles (γ, γ') que forment les lignes médianes de rainure (M_{N4a}) des rainures (4a) s'étendant au plus près du plan équatorial avec les tangentes (T₁) varient par rapport à 90° d'un maximum de 15°, de préférence de jusqu'à 12°.

7. Pneumatique de véhicule selon la revendication 1, **caractérisé en ce que** les angles (δ, δ') que forment les lignes médianes de rainure (M_{N4a}) des rainures (4b) s'étendant le plus loin côté extérieur de la bande de roulement avec les tangentes (T₂) varient de 20° à 25° par rapport à 90°.

8. Pneumatique de véhicule selon l'une quelconque des revendications 1 à 7, **caractérisé en ce que** les rainures (4a, 4b) divisent les blocs de sculpture allongés (3) en segments de bloc côté épaule (3b) et en segments de bloc médians (3a), les segments de bloc médians (3a) présentant le long de leurs lignes médianes de bloc des longueurs d'extension (l₁) concordantes.

9. Pneumatique de véhicule selon l'une quelconque des revendications 1 à 8, **caractérisé en ce que** les rainures (4a, 4b) divisent les blocs de sculpture allongés (3) en segments de bloc côté épaule (3b) et en segments de bloc médians (3a), les segments de bloc médians (3a) présentant le long de leurs lignes médianes de bloc des longueurs d'extension (l₁) différentes, dans lequel de préférence la longueur d'extension des segments de bloc médians (3a) augmente à mesure que la distance de leur position par rapport au plan équatorial augmente, et dans lequel en particulier la longueur d'extension du segment de bloc médian (3a) le plus long est supérieure d'un maximum de 20 % à la longueur d'extension du segment de bloc médian (3a) le plus court.

10. Pneumatique de véhicule selon l'une quelconque des revendications 1 à 9, **caractérisé en ce que** la profondeur (t₁) des rainures (4a, 4b) correspond à 45 % à 55 %, en particulier à 50 %, de la profondeur de sculpture respectivement prévue.

11. Pneumatique de véhicule selon la revendication 1, **caractérisé en ce que** les entailles (6a, 6b) dans les rainures (4a, 4b) se terminent dans la direction radiale à une distance (a₁) allant jusqu'à 2,0 mm au-dessus du niveau de la profondeur de sculpture.
